# EUROPEAN PATENT SPECIFICATION

(11) **EP 2 054 654 B1**
(45) Date of publication and mention of the grant of the patent: **03.03.2010**
(21) Application number: 07804016.9
(22) Date of filing: 03.08.2007
(51) Int. Cl.: F16K 21/10, F16K 1/52

(54) **IMPROVEMENTS IN OR RELATING TO WATER DELIVERY DEVICES**
VERBESSERUNGEN VON WASSERZUFUHRVORRICHTUNGEN ODER DIESE BETREFFEND
AMÉLIORATIONS POUR DISPOSITIFS DE DISTRIBUTION DE L'EAU

(30) Priority: 10.08.2006 GB 0615925
(43) Date of publication of application: 06.05.2009
(73) Proprietor: Aquasmart Holdings Limited, Medway City Estate Rochester ME4 2LU (GB)
(72) Inventor: WILLIAMSON, Robert, Kent TN2 4TP (GB); COLLINS, Rob, Kent CT6 7EJ (GB)
(74) Representative: Williamson, Brian
(86) International application number: PCT/GB2007/002965
(87) International publication number: WO 2008/017815

(56) References cited:
- GB-A- 392 151
- GB-A- 2 289 933
- US-B1- 6 276 659

## Description

This invention relates to water delivery systems and is primarily concerned with adaptors for water outlet devices for use in a variety of environments.

One problem with taps in the washroom environment is that if a conventional tap or other associated water delivery system is used which can be turned on by rotating the tap handle, the tap can be left on resulting in wastage of water and energy.

Attempts to solve this problem have been suggested in which a tap has to be pushed down in order to open it, but a problem with this arrangement is that it is difficult to wash one's hands if one hand has to be used to hold down the tap in order to keep it open.

Various delay means have been suggested in order to avoid the necessity of holding the tap down in order to keep it open while, at the same time, limiting the time in which the tap is on in order to prevent or at least limit the wastage of water. In one suggestion, a tap is provided which has an insert body having a central bore in which is located an actuator rod. When depressed, the actuator rod opens the tap and is biased back to a closed position by a spring and/or water pressure.

Return movement of the actuator rod to the closed position under the action of the spring/water pressure is delayed by a piston movable in a chamber and connected to the actuator rod. A ring on the piston engages the walls of the chamber and the frictional effect of this engagement delays return of the actuator rod to the closed position. A significant disadvantage of this arrangement is that the ring is susceptible to wear. Also, the operational mechanism is exposed to water and is susceptible to degradation and wear primarily through salts and contaminants in the water supply feed, thus calling for frequent replacement if the delaying action is to function effectively.

Further, such pressed-down taps tend to become clogged with lime scale and like deposits so that, in time, only a very little amount of water flows when the tap is pressed down. Eventually, when pressed to the open position the mechanism can lock in the open position so that water flows continuously or, in the alternative, the tap becomes so stiff that it cannot be pushed down at all. Furthermore, the delay is dependent upon the wear of the ring and therefore the delay varies as the ring wears.

In another suggestion, an actuator rod is again displaced by a pressing action to open a tap against the action of a spring, which spring urges the actuator rod towards the closed position. In this case, return movement of the actuator rod is delayed by the engagement of a resilient ring on the actuator rod but, again, the ring is susceptible to water borne contamination and wear so that frequent replacement is necessary if the delaying action is to function effectively.

These disadvantages of the existing taps were overcome by the applicant's earlier invention, as detailed in GB 2289933 by providing an adaptor for a tap which can be turned on and which allows water to flow with hands off operation for only a preset limited period of time. The adaptor avoids the use of friction rings, and thus the need for frequent maintenance and/or replacement.

However, in these days of increased water shortages tap manufacturers not only face the problem of the wasting of water, they also face a demand from users to limit water to the amounts required for individual jobs. For example, the water required to wet a toothbrush prior to use is significantly less than that required to wash one's hands. Therefore, it is desirable to have a one-push tap, which provides a predetermined amount of water, as described above, but which can also operate in two or more modes in which the volume of water dispensed is different in each mode

Accordingly, there is provided an adaptor for a water delivery device comprising a tap head, a tap body and a plunger, the plunger being slidably mounted within the body so as to be movable from a closed position to both a first open position and a second open position; resilient means being arranged to return the plunger from either open position to said closed position, the adapter being arranged such that the return to the closed position from said first and second open positions takes different lengths of time, and adjustment means arranged to adjust the ratio between the length of time for the plunger to return to the closed position from the first open position and the length of time for the plunger to return to the closed position from the second open position.

The adjustment means may be arranged to adjust the first open position.

The adjustment means may be arranged to adjust the second open position.

The adjustment means may comprise a threaded adjuster.

The threaded adjuster may be threaded into the body.

The threaded adjuster may be threaded into the tap head.

Embodiments of the present invention will now be further described, by way of example, with reference to the drawings, wherein:-
Figure 1 is a cross-sectional view of one embodiment of an adaptor for a prior art tap shown in the closed position;
Figure 2 is a cross-sectional view of the tap adaptor shown in Fig. 1 but showing the adaptor in an open position;
Figures 3A and 3B show valve means of the tap adaptor of Fig. 1 in open and closed positions, respectively;
Figure 4 shows a side view of an outlet part of the tap adaptor;
Figure 5 shows an exploded view of the outlet part;
Figures 6A to 6E show different designs and/or sizes of outlet parts.
Figure 7 illustrates a tap in accordance with the present invention;
Figure 8 illustrates the tap of Fig. 7, in a first open position;
Figure 9 illustrates the tap of Fig. 7, in a second open position;
Figures 10A, 10B and 10C illustrate an embodiment of an adapter for the above tap having an adjustable short stroke;
Figure 11 illustrates a tap adapter having a vacuum release portion with the plunger in the depressed position; and
Figure 12 illustrates a tap adapter having a vacuum release portion with the plunger in the raised position.

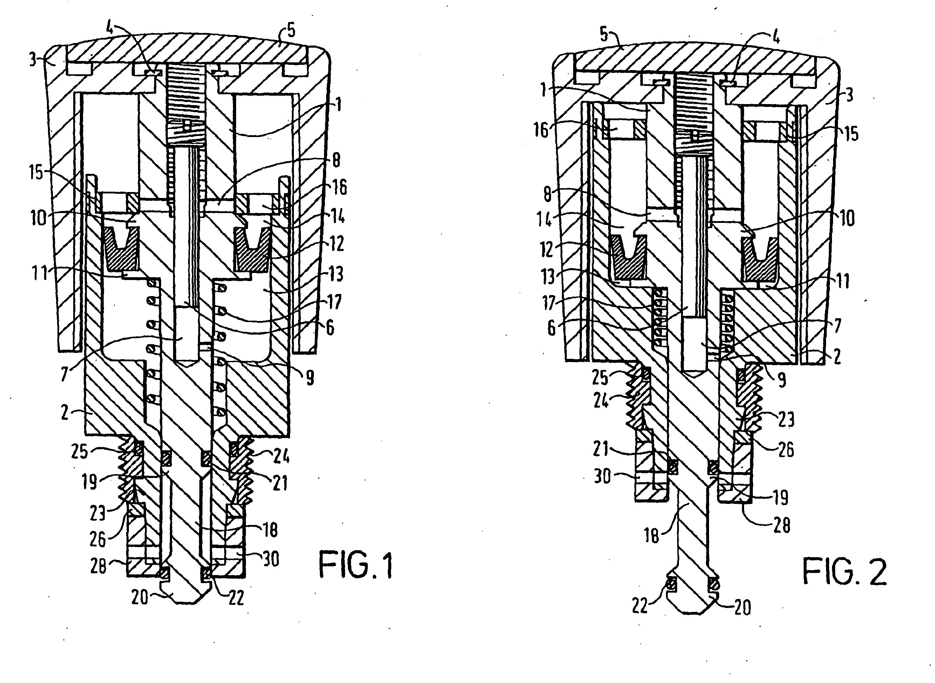

Referring to the drawings, an adaptor for a tap, as detailed in Figs. 1 to 6E comprises a cylindrical body 2 which is symmetrical about a central longitudinal axis and has a cylindrical bore concentric relative to said axis, the bore having one portion of larger diameter to form a first chamber 13 and a second chamber 14 and another portion of reduced diameter retaining spring means. Slidably mounted in the body 2 is a plunger 1 of circular cross-section which has a first portion of larger diameter within the portion of the bore of larger diameter and a second portion of reduced diameter extending through the other portion of the bore. The plunger 1 has a hollow tap head 3 mounted on a spigot on one end thereof which spigot has a circular recess around its circumference for the reception of a circlip 4 which retains the head 3 on the plunger 1. A cover 5 which may be decorative and made of metal or plastics material is a push-in tight fit in the top of the head 3 or is clipped in. The head 3 has a circular top plate with a circular hole to receive the spigot. Depending from the top plate is a cylindrical skirt which surrounds the body 2.

A control passage 7 of circular cross-section extends along the interior of the plunger 1. At one end of the passage 7 a cross-bore or aperture 9 of circular cross-section extends to the exterior of the plunger 1 and spaced therefrom and at the other end of the passage 7 two diametrically arranged and diametrically opposed apertures or holes 8 of circular cross-section extend into the chamber 14 at the exterior of the plunger 1.

Collars 10 and 11 formed on the exterior of the plunger 1 retain a circular cup seal 12 of V-shaped cross-section. The seal 12 forms on one of its sides one end of the chamber 13 within the body 2 and on its other side one end of the second chamber 14 formed within the body 2. The other end of the second chamber 14 is formed by a retaining cap 15 mounted on the body 2 (and having apertures 16 for the passage of air). Between the collar 11 and a wall formed by an end or portion of the interior of the body 2 of reduced cross-section relative to the interior of the body 2 forming the chamber 13, there is arranged the spring means in the form of a coil spring 17.

A bore extends along the interior of the plunger 1 and one end of the bore forms the control passage 7. At the end of the plunger adjacent the spigot the bore is internally screw-threaded. A needle valve 6 has a screw-threaded boss 6A corresponding to the thread of the threaded portion of the bore. The needle valve is of metal or plastics material or may be moulded from plastics material with a tapered bore made during moulding. The needle valve 6 extends into the control passage 7 with the boss 6A engaging the internal screw-thread of the plunger 1. Rotation of the boss 6A causes the needle valve 6 to move along the bore of the plunger 1.

At the end of the plunger 1 remote from its end attached to the head 3 there is provided a tubular portion 18 of reduced cross-section relative to the parts of the plunger containing the needle valve 6. The tubular portion 18 has a frusto-conical collar 19 at one end thereof and a head 20 at the other end thereof, the collar 19 being provided with a rubber ring seal 21 and the head 20 being provided with a rubber ring seal 22. Surrounding the portion 18 is a cylindrical extension 23 projecting from the body 2.

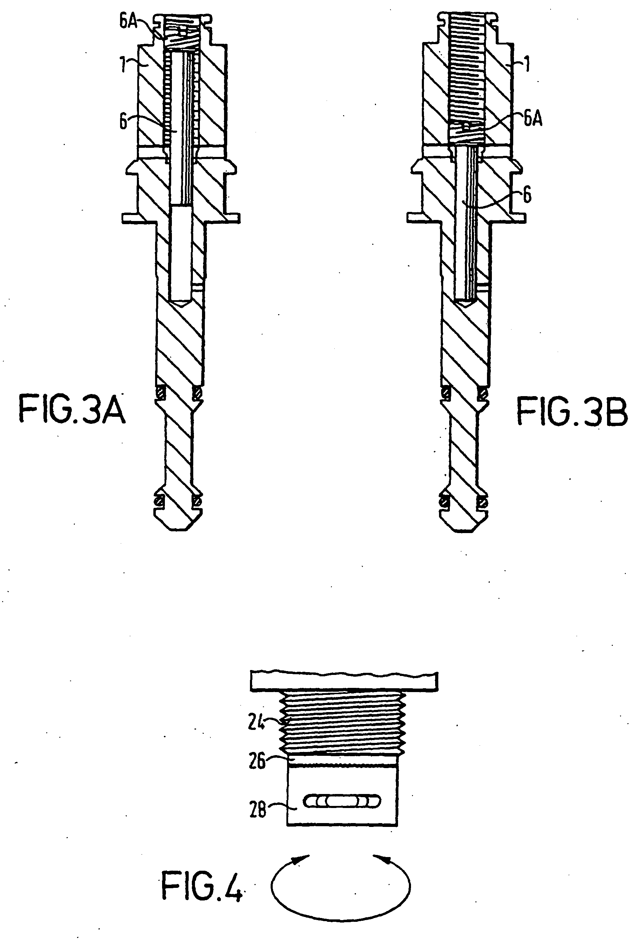

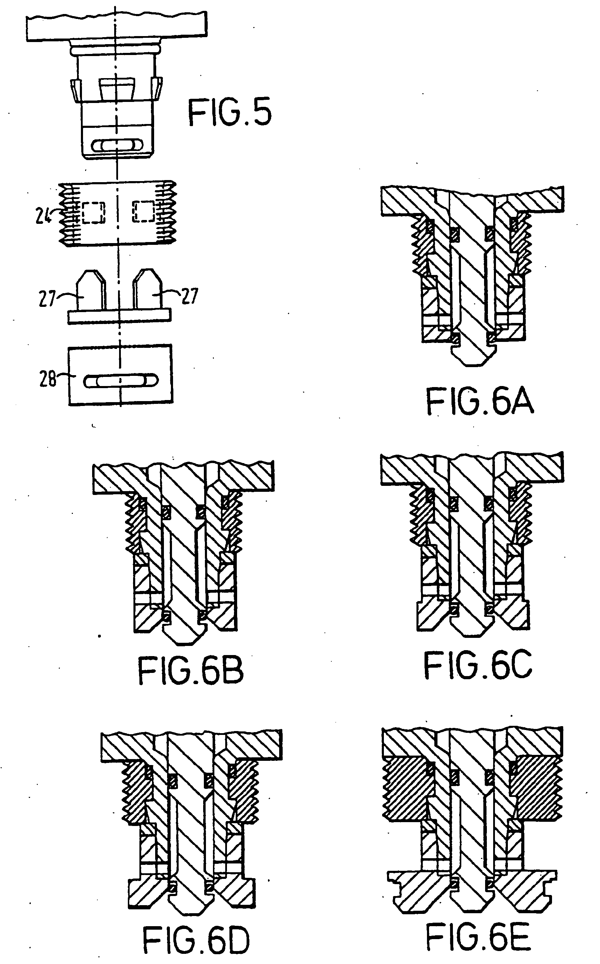

As shown in Figure 5 the extension 23 has bayonets which fit into apertures of and locate an interchangeable thread member 24 to prevent rotation thereof, with a rubber ring seal 25 interposed between extension 23 and member 24. A thread retainer 26 has tines 27 which lock the thread member 24 in position and has a crown gear meshing with a corresponding gear on an interchangeable restrictor 28 which is clipped onto the extension 23. As shown by Figure 4 the restrictor 28 is rotationally adjustable prior to final location to adjust aperture alignment and thus eventual water flow rate.

The adaptor for a tap as described above operates as follows:
1. Pushing plunger 1 down evacuates chamber 13 allowing air to pass seal 12 while allowing air into chamber 14 via aperture 16.
2. Upon release of the plunger the spring 17 forces the plunger up to create a low pressure resistance in chamber 13 maintained by seals 12 and 21 but allowing air to slowly leak through apertures 8 and aperture 9 via the adjustable tapered needle valve.
3. The time delay is created by adjusting the flow of air passing through the tapered needle valve from inlet aperture 8 to aperture 9.
4. The water flows in the direction of arrow X via outlet 30 in the direction of arrow Y. The water is shut off by seal 22 when plunger 1 is pushed back up.

As shown in Figures 3A and 3B the needle valve 6 is adjustable between two limit positions. The needle valve 6 by means of its screw-threaded boss 6A engages the screw thread in the plunger 1. The boss 6A can be turned with a screwdriver or like tool to move the valve 6 along the plunger. The needle valve has a machined bore of constant cross-section or is moulded with a tapered bore, the larger cross-section of the bore being towards the boss end of the needle. In the position shown in Figure 3A the turning off of the tap is almost instantaneous whereas in the position show in Figure 3B there is the longest delay.

Figures 6A to 6E show various designs and/or sizes of thread members and restrictors to suit existing tap mountings. The body 2 and operating mechanism are standard for all taps and mountings.

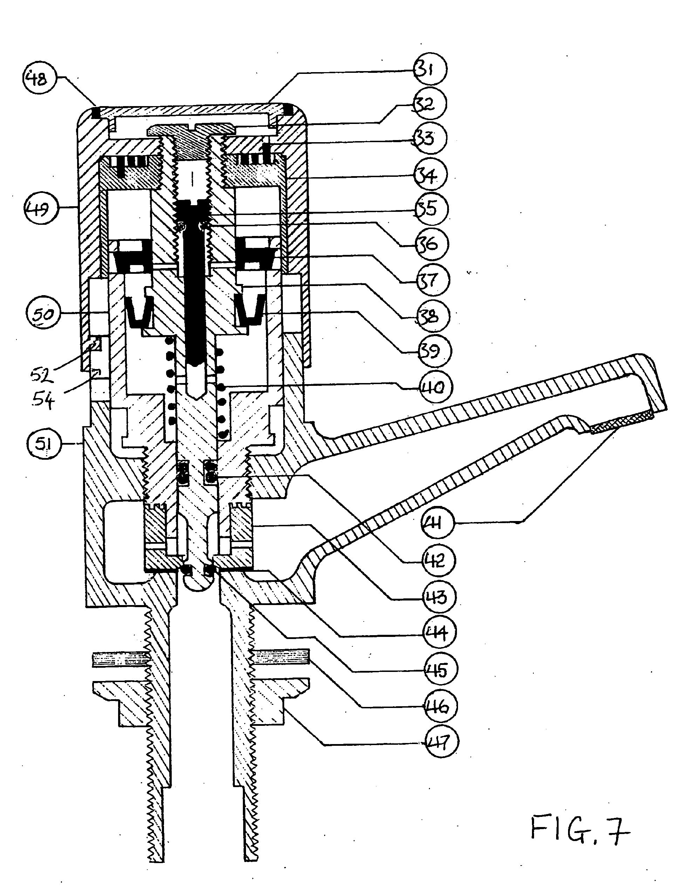

Figure 7 illustrates a tap adaptor, in accordance with the present invention. Although the needle valve 6 in the tap described above, with reference to Figs 1 to 6E, can be set in any one position along a continuum prior to use, the tap when set for use can only be arranged to provide a single pre-set volume of water. This means that should a user wish to dispense a different volume of water that the needle valve 6 would have to be readjusted prior to use of the tap.

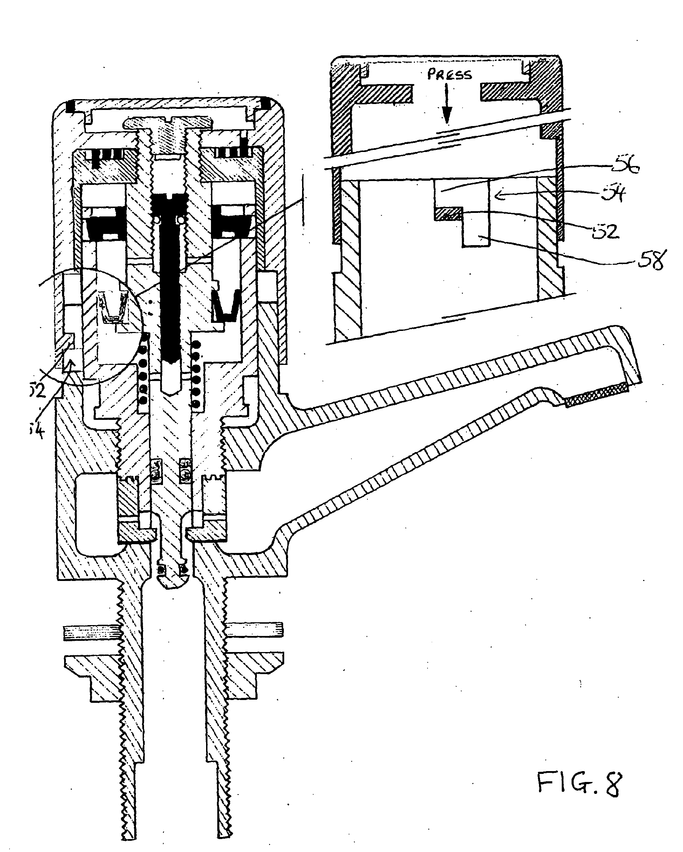

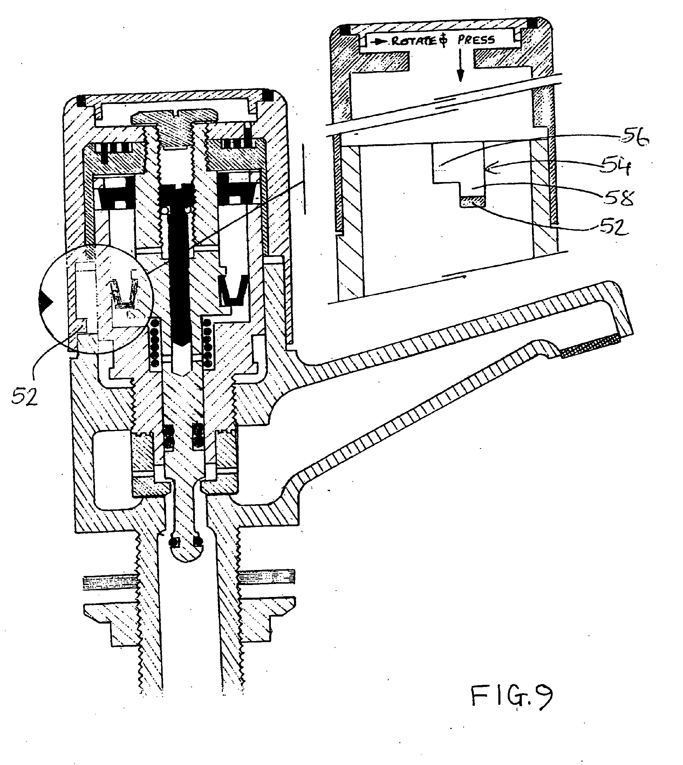

Figure 7 illustrates a tap in accordance with the present invention in which this is not the case. Figures 8 and 9 illustrate the tap of Figure 7 in two separate operating or open positions, as will be described in detail below.

The tap can be thought of as a whole entity suitable for controlling the flow of a fluid. To this end the operation of the substantial part of the tap will operate as the prior art tap described previously herein. However, the tap can also be thought of as a tap base 51 and a tap adapter. The tap base would be coupled to the plumbing system in a house or public washroom and the tap adapter could be retrofitted thereto in order to upgrade an existing tap to use the adapter of the present invention. The tap base would be any tap base designed to comply with appropriate national plumbing standards. The tap adapter, when in use, will be arranged to fit to any such tap base.

Figure 7, illustrates the component parts of the tap, which are numbered as follows:

| | |
|---|---|
| 31 | Cap Insert |
| 32 | Head Retaining Screw |
| 33 | Head Return Spring |
| 34 | Shroud |
| 35 | Needle Valve |
| 36 | Needle Valve O Ring |
| 37 | Retainer |
| 38 | Plunger |
| 39 | Cup Seal |
| 40 | Plunger Return Spring |
| 41 | Spout Spray Diffuser |
| 42 | Plunger O Rings |
| 43 | Flow Restrictor |
| 44 | Optional Seating Washer |
| 45 | Restrictor O Ring |
| 46 | Tap/Basin Seating Washer |
| 47 | Tap/Basin Retaining Nut |
| 48 | Hot/Cold Identification Ring |
| 49 | Tap Head |
| 50 | Tap Body |
| 51 | Tap Base |
| 52 | Protrusion |

The tap adapter comprises a tap head 49, a tap body 50 and a plunger 38. The plunger 38 is slidably mounted within the body 50 so as to be movable from a closed position as illustrated in Figure 7 to both a first open position as illustrated in Figure 8 and a second open position as illustrated in Figure 9.

Resilient means in the form of a first spring 40 and second spring 33 are arranged to return the plunger from either open position to the closed position.

As will become clear with a review of the adapter as illustrated in Figures 8 and 9, the adapter is arranged such that the return to the closed position from said first and second open positions takes different lengths of time.

Figure 8 illustrated the adapter in which the plunger 38 is in the first open, which lies in line with the closed position but extended therefrom by the partial compression of the spring 40. This can be achieved as will be discussed below by a user asserting a force directly down on the head 49, in line with the axis of the plunger 38.

Figures 9 illustrates the adapter in which the plunger 38 is in the second open position, which lies rotationally offset from the closed position. This can be achieved as will also be discussed below by a user first rotating the head 49 with respect to the axis of the plunger 38, prior to asserting a force directly down on the head 49, in line with the axis of the plunger 38.

As can be seen in more detail in Figure 8 this control of the movement of the plunger is achieved through the tap head 49 and tap body 50 having cooperating means which control the movement of the plunger 38 between the closed and open positions. In particular, there is a protrusion 52 on the inside of the tap head 49 and a corresponding channel 54 in the wall of the tap body 50, such that movement of the plunger is only possible by moving the protrusion 52 through said channel 54. The channel 54 comprises a first portion 56 of a first length and a second portion 58, of a second length, positioned adjacent, but rotationally displaced from, said first portion 56 such that the protrusion 52 can move from said first portion to said second portion in response to the rotation of the head 50. The first portion 56 is shorter than the second portion 56, although this is a matter of choice. The first open position is achieved when the protrusion 52 lies at the base of said first portion 56 and the second open position is achieved when the protrusion 52 lies at the bottom of the second portion 58.

The length of time required for the plunger to return from the first open position to the closed position lies in the range 5 to 8 seconds. The length of time required for the plunger to return from the second open position to the closed position lies in the range 10 to 360 seconds.

The volume of water passed by the tap in each action is set both by the length of the first and second portions 56 & 58, by the tension of the spring and by the position of the restrictor 28 as illustrated in relation to the prior art tap, when adapted for use in the dual action tap described herein.

When in use a person wishing a short burst of water will strike or otherwise urge the tap from above causing a downward movement of the tap head 49 and plunger 38 into said first open position, at the base of the first portion 56. If a user wishes a larger volume of water to be passed he or she will first rotate the head 49 and therefore the plunger 38 and thereafter urge the tap downwards into said second open position, at the base of the second portion 58.

In the embodiments described above, the duration of both the long and short strokes is defined by the position of the needle valve and that duration can be adjusted by movement of the needle valve. However, the ratio of the length of the long and short strokes (and hence duration of water flow) is fixed by the position of the stops, and it is not therefore possible to adjust the duration of the long and short strokes independently.

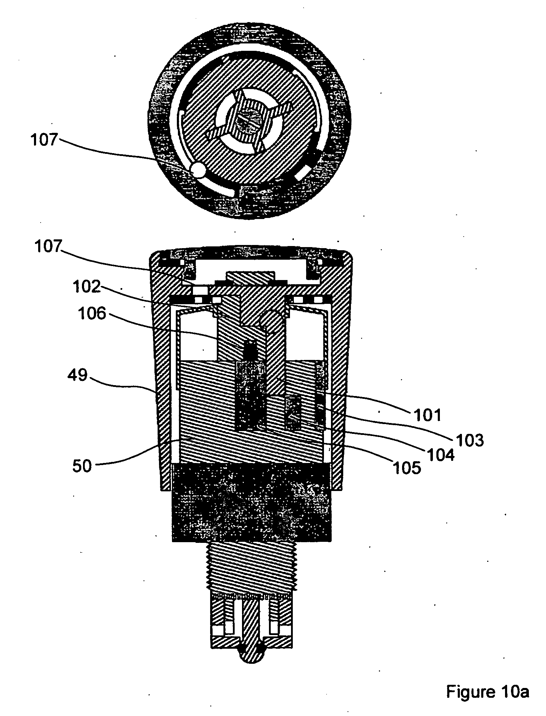

Figures 10a - 10c show a further embodiment incorporating an alternative stop structure incorporating an adjuster means to allow the ratio of the duration of the long and short strokes to be adjusted.

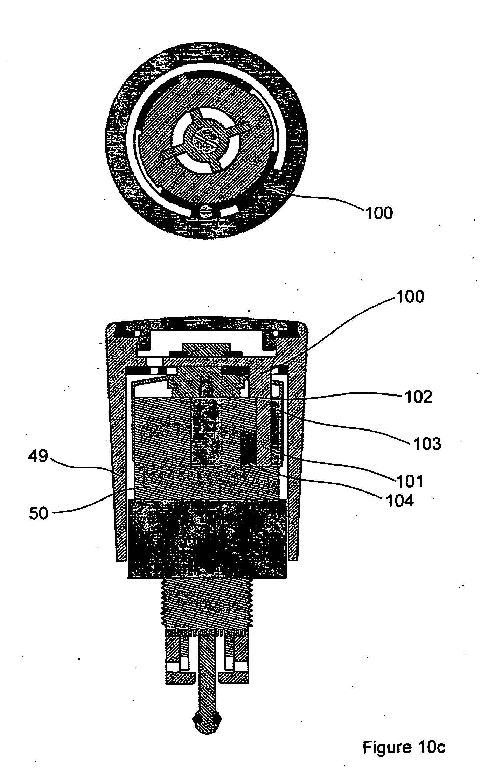

Figure 10a shows the tap head 49 in the resting, unretated, position in which a short duration of water flow is obtained by pressing the tap head 49 downwards, as explained previously. Guide portion 101 is aligned to be between stroke guides 104 and 105 and stop portion 102 is aligned above stroke adjustment means 106. When the tap head 49 is depressed, stop portion 102 contacts stroke adjustment means 106 preventing the tap head from moving through the full stroke as occurs with the tap head in the rotated position (see Figures 10c and 10c).

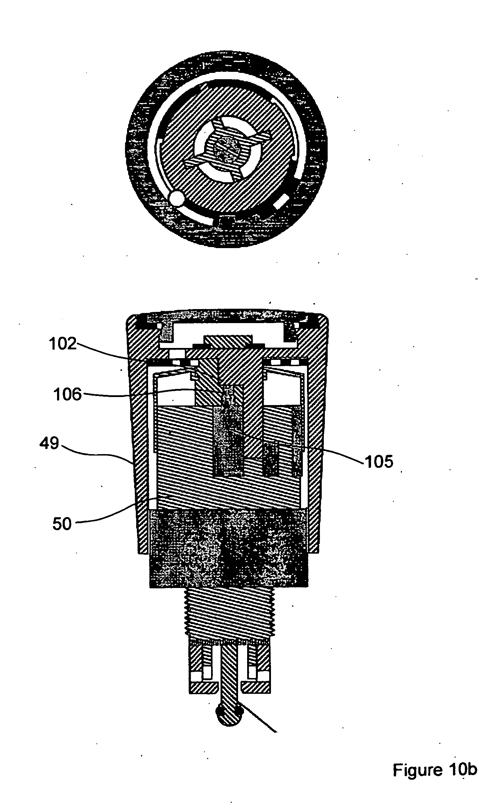

Figure 10b shows the embodiment with the tap head 49 in the unrotated (short stroke) position and with the tap head 49 depressed such that the stop 102 contacts the adjustment means 106. As explained in connection with the other embodiments once the tap head is released it will move upwards under the force of the spring to provide a predetermined duration of water flow.

The length of the short stroke is determine by the adjustment means 106. Adjustment means 106 are formed of a threaded part 106 which is threaded into the stroke guide 105 thereby allowing the height of the stop 106 to be adjusted by screwing the part 106 into or out of the guide 105. An opening 107 is provided in the tap head 49 to allow access to the stop means 106 for its adjustment.

Tap head 49 may be rotated and depressed as described above in order to provide a longer duration of water flow. Figure 10c shows the tap head in the rotated and depressed position. Stroke guide 103 acts as a rotation stop in conjunction with guide portion 101. When the tap head is rotated such that guide portion 101 contacts stroke guide 103, the guide portion 101 is aligned between stroke guides 103 and 104. Stop 102 has moved clear of stroke adjustment means 106, thereby allowing the tap head to move through the full stroke to the position shown in Figure 10c. Once the tap head is released from the position shown in Figure 10c it rises as described previously, and once guide portion 101 moves clear of the stroke guide 104 rotates back to the unrotated position, thereby returning to the position shown in Figure 10a.

In Figures 10a - 10c the adjustment means 106 is shown as being screwed into stroke guide 105. In an alternative embodiment the adjustment means may be screwed into stop 102 with the upper end of the adjustment means protruding from the top of the stop 102 and the lower end protruding from the surface of the stop 102 such that the lower end of the adjustment means contacts the top of guide 105 to define the length of the short stroke. Such a configuration allows access to the adjustment means without a requirement to align hole 107 with the adjustment means 106 as is required in the embodiment shown in Figures 10a - 10c. As will be apparent to the skilled person, other implementations are possible to adjust the relative length of the long and short strokes.

The embodiment described hereinbefore provides two lengths of strokes, but more than two could also be provided by the provision of more than two stop members, each located to provide a different stroke length. Incremental rotation of the tap head would allow, selection of the particular stroke length required.

As explained previously water flows through the opening 30 and the flow is controlled by o-ring 22. As the plunger returns to its rest position and the O-ring 22 approaches its seat, the flow rate of water decreases due to a reduction in the opening size. Such a reduction in water flow is undesirable as the gradual reduction is unattractive to users and the reduced flow may be insufficient to be useful. It is therefore desirable to provide a tap adaptor that provides a substantially constant flow for a defined duration with a rapid cutoff at the end of the period.

Water flow varies greatly depending on many factors, the application, taps in kitchen or bathrooms wash hand basins or sinks, showers, baths etc. It also varies depending on the diameter of pipe supplying the water and whether or not it is pumped under pressure, pumped with now pressure or gravity fed. It is random enough to even be dependent on factors as arbitrary as how far you are from various pumping stations or if you are at the top or the bottom of a hill.

Having understood the above factors it is probably most useful to focus on the following averages. At between 0.5 bar of pressure and three bar the average amount of water delivered at an outlet is between six and ten litres per minute.

We have discovered using the cartridges over a longer cycle that there was not a defined closure once the set time for water deliver had been reached. There was in fact a fairly constant period at the end of the cycle of between15-20% of the useful cycle period where the water effectively trickled at a rate that wasted water but could not be used for anything.

On a typical 4 minute long cycle this produced a period of unusable water supply of about 45-50 seconds. Even at a lower flow rate of 20-25% of average flow this was effectively wasting between 1.25 litres and 2.25 litres of water on each 4 minute cycle.

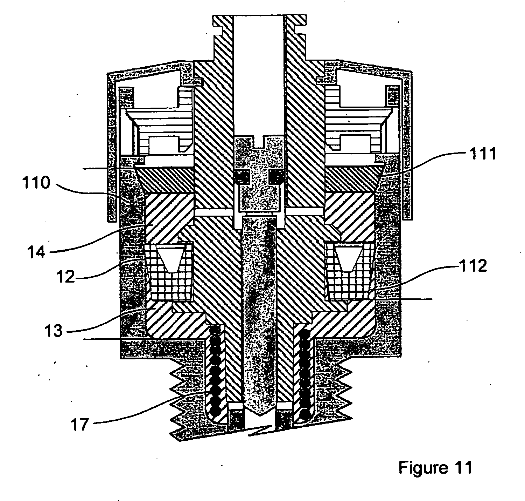

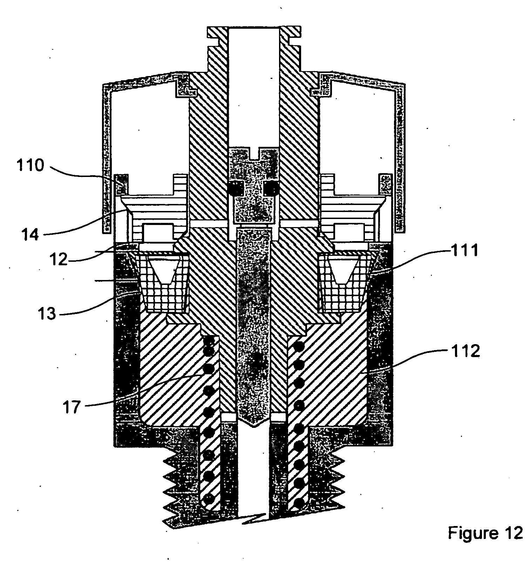

Figure 11 shows an embodiment that addresses this problem. As explained previously the duration of the stroke is defined by the flow of air from second chamber 14 to first chamber 13 via the needle valve 6 and internal passageways 8, 9. In the embodiment shown in Figure 11 the internal wall 10 defining the first and second chambers 13, 14 includes a vacuum release portion 111 in which the diameter of the chamber 14 increases towards the top of the chamber. While the seal 12 is in contact with the lower portion 112 of the internal wall 110 operation is as described previously with the plunger being driven upwards by the spring 17 against the resistance of air flowing via the needle valve 6 and internal passageways 8 and 9. As the plunger rises, the seal 12 moves into the vacuum release portion 111 as shown in Figure 12. The increase in diameter of the wall 110 is such that the seal between the seal 12 and wall 110 is broken allowing air to flow from the second chamber 14 to the first chamber 13 around the seal. This air flow is at a significantly greater rate than the air flow permitted by the needle valve 6 and internal passageways 8 and 9 and therefore the rate of movement of the plunger under the force of the spring 17 is greater than while the seal is in the region 112 of the wall 110. The final part of the movement is thus completed in a substantially shorter time than the main part of the movement.

Thus instead of crawling to a close, with a useless flow, as the o-ring 22 approaches its seat, the tap is snapped closed after the desired volume of water has been dispensed with out any water being wasted in the last seconds of the action. This makes the tap much more usable as water wastage in ineffectual delivery pressures would render the tap unusable in practice.

The start point of the vacuum release portion 111 may be defined to coincide with the point at which the flow rate of water begins to diminish due to the approach of o-ring 22 thereby preventing a gradual reduction in flow-rate. In an example, the vacuum release portion may be defined such that the seal is broken when the plunger is in the top 1/3 of its stroke.

The movement of the plunger back to the closed position therefore comprises two phases. The first phase occurs while the seal is in the region 112 of the wall 110 during which the speed of movement is defined by the needle valve 6 and internal passageways 8 and 9, and the second phase occurs while the seal 112 is in the region 111 during which the speed of movement is defined primarily by the flow of air around the seal.

In the embodiment of Figure 11, the vacuum release portion is shown having a diameter that increases linearly towards the top of the chamber. Other patterns may also be provided, for example a step change in diameter. The vacuum release portion must perform the function of allowing air to flow around the seal at a significantly higher rate than allowed by the needle valve, and any wall design that provides this function could be utilised.

Modifications can be incorporated without departing from the invention as claimed. For example, the invention also extends to taps fitted with the adaptor above-described.

The foregoing description has been made in respect of taps, but as will be apparent to the skilled person the current invention is also applicable to other water outlet devices, for example shower units, toilets and any water control valve in which a predetermined volume of water is required.

As will be apparent to the skilled person the various embodiments described herein may be combined to provide a tap adaptor having features exhibited by each of the embodiments.

## Claims

1. An adapter for a water delivery device, comprising a tap head (49), a tap body (50) and a plunger (38), the plunger (38) being slidably mounted within the body (50) so as to be movable from a closed position to both a first open position and a second open position;
resilient means (33, 40) being arranged to return the plunger from either open position to said closed position, the adapter being arranged such that the return to the closed position from said first and second open positions takes different lengths of time, and
adjustment means arranged to adjust the ratio between the length of time for the plunger to return to the closed position from the first open position and the length of time for the plunger to return to the closed position from the second open position.

2. An adapter according to claim 1, wherein the adjustment means are arranged to adjust the first open position.

3. An adapter according to claim 1, wherein the adjustment means are arranged to adjust the second open position.

4. An adapter according to any preceding claim, wherein the adjustment means comprises a threaded adjuster.

5. An adapter according to claim 4, wherein the threaded adjuster is threaded into the body.

6. An adapter according to claim 4, wherein the threaded adjuster is threaded into the tap head.

7. An adapter as claimed in any preceding claim, wherein the resilient means is a spring (44).

8. An adapter as claimed in claim 7, wherein the resilient means includes a second spring (33) arranged to counteract rotational movement of the plunger (38) away from the closed position.

9. An adapter as claimed in any preceding claim, wherein the first open position lies in line with the closed position.

10. An adapter as claimed in claim 9, wherein the second open position is rotationally offset from the closed position.

11. An adapter as claimed in any preceding claim, wherein the tap head (49) and tap body (50) have cooperating means which control the movement of the plunger (38) between the closed and open positions.

12. An adapter as claimed in claim 11, wherein there is a protrusion (52) on the inside of the tap head (49) and a channel (54) in the wall of the tap body (50), such that movement of the plunger is only possible by moving the protrusion through said channel (54).

13. An adapter as claimed in claim 12, wherein the channel (54) comprises a first portion (56) of a first length and a second portion (56) positioned adjacent, but rotationally displaced from said first portion (54) such that the protrusion (52) can move from said first portion to said second portion (58) in response to the rotation of the head (50).

14. An adapter as claimed in claim 13, wherein the first portion (54) is shorter than the second portion (58) and said first open position is achieved when the protrusion (52) lies at the base of said first portion and the second open position is achieved when the protrusion lies at the bottom of said second portion (58).

15. An adapter as claimed in any preceding claim, wherein the length of time required for the plunger to return from the first open position to the closed position lies in the range 5 to 8 seconds.

16. An adapter as claimed in any preceding claim, wherein the length of time required for the plunger to return from the second open position to the closed position lies in the range 10 to 360 seconds.

## Patentansprüche

1. Adapter für eine Wasserzufuhrvorrichtung, umfassend einen Hahnkopf (49), einen Hahnkörper (50) und einen Kolben (38), wobei der Kolben (38) gleitbar montiert ist in dem Körper (50), um beweglich zu sein von einer geschlossenen Position zu sowohl einer ersten geöffneten Position als auch zu einer zweiten geöffneten Position;
wobei ein Rückstellmittel (33, 40) angeordnet ist, um den Kolben von einer geöffneten Position zu der geschlossenen Position zurückzustellen, wobei der Adapter so angeordnet ist, dass das Rückstellen zu der geschlossenen Position von den ersten und zweiten geöffneten Positionen unterschiedliche Zeitlängen in Anspruch nimmt, und
wobei Einstellmittel angeordnet sind, um das Verhältnis einzustellen zwischen der Zeitlänge, die der Kolben benötigt, um zu der geschlossenen Position von der ersten geöffneten Position zurückzukehren, und der Zeitlänge, die der Kolben benötigt, um zu der geschlossenen Position von der zweiten geöffneten Position zurückzukehren.

2. Adapter gemäß Anspruch 1, wobei die Einstellmittel angeordnet sind, um die erste geöffnete Position einzustellen.

3. Adapter gemäß Anspruch 1, wobei die Einstellmittel angeordnet sind, um die zweite geöffnete Position einzustellen.

4. Adapter gemäß einem der vorherigen Ansprüche, wobei die Einstellmittel einen gewindeartigen Einsteller umfassen.

5. Adapter gemäß Anspruch 4, wobei der gewindeartige Einsteller in den Körper geschraubt ist.

6. Adapter gemäß Anspruch 4, wobei der gewindeartige Einsteller in den Hahnkopf geschraubt ist.

7. Adapter gemäß einem der vorherigen Ansprüche, wobei das Rückstellmittel eine Feder (44) ist.

8. Adapter gemäß Anspruch 7, wobei das Rückstellmittel eine zweite Feder (33) umfasst, angeordnet, um einer Drehbewegung des Kolbens (38) weg von der geschlossenen Position entgegenzuwirken.

9. Adapter gemäß einem der vorherigen Ansprüche, wobei die erste geöffnete Position ausgerichtet ist mit der geschlossenen Position.

10. Adapter gemäß Anspruch 9, wobei die zweite geöffnete Position drehversetzt ist von der geschlossenen Position.

11. Adapter gemäß einem der vorherigen Ansprüche, wobei der Hahnkopf (49) und der Hahnkörper (50) zusammenwirkende Mittel aufweisen, die die Bewegung des Kolbens (38) zwischen den geschlossenen und geöffneten Positionen steuern.

12. Adapter gemäß Anspruch 11, wobei ein Vorsprung (52) an der Innenseite des Hahnkopfs (49) vorgesehen ist und ein Kanal (54) in der Wand des Hahnkörpers (50), so dass eine Bewegung des Kolbens nur möglich ist mittels Bewegens des Vorsprungs durch den Kanal (54).

13. Adapter gemäß Anspruch 12, wobei der Kanal (54) einen ersten Abschnitt (56) einer ersten Länge und einen zweiten Abschnitt (56) umfasst, der benachbart positioniert ist, jedoch drehversetzt von dem ersten Abschnitt (54), so dass der Vorsprung (52) sich von dem ersten Abschnitt zu dem zweiten Abschnitt (58) bewegen kann in Reaktion auf die Drehung des Kopfs (50).

14. Adapter gemäß Anspruch 13, wobei der erste Abschnitt (54) kürzer ist als der zweite Abschnitt (58) und die erste geöffnete Position erreicht wird, wenn der Vorsprung (52) an der Basis des ersten Abschnitts liegt, und die zweite geöffnete Position erreicht wird, wenn der Vorsprung am Boden des zweiten Abschnitts (58) liegt.

15. Adapter gemäß einem der vorherigen Ansprüche, wobei die Zeitlänge, die für den Kolben erforderlich ist, um von der ersten geöffneten Position zu der geschlossenen Position zurückzukehren, im Bereich 5 bis 8 Sekunden liegt.

16. Adapter gemäß einem der vorherigen Ansprüche, wobei die Zeitlänge, die für den Kolben erforderlich ist, um von der zweiten geöffneten Position zu der geschlossenen Position zurückzukehren, im Bereich 10 bis 360 Sekunden liegt.

## Revendications

1. Adaptateur pour un dispositif de distribution d'eau, comprenant une tête (49) de robinet, un corps (50) de robinet et un plongeur (38), le plongeur (38) étant monté coulissant dans le corps (50) de manière à pouvoir être déplacé d'une position fermée à la fois à une première position ouverte et à une deuxième position ouverte ;
des moyens (33, 40) élastiques étant conçus pour ramener le plongeur de l'une ou l'autre des positions ouvertes à la position fermée, l'adaptateur étant conçu de manière à ce que le retour à la position fermée à partir de la première et de la deuxième positions ouvertes prennent des longueurs de temps différentes, et
un moyen de réglage conçu pour régler le rapport entre la longueur du temps pour que le plongeur revienne à la position fermée à partir de la première position ouverte et la longueur du temps pour que le plongeur revienne à la position fermée à partir de la deuxième position ouverte.

2. Adaptateur suivant la revendication 1, dans lequel le moyen de réglage est conçu pour régler la première position ouverte.

3. Adaptateur suivant la revendication 1, dans lequel le moyen de réglage est conçu pour régler la deuxième position ouverte.

4. Adaptateur suivant l'une quelconque des revendications précédentes, dans lequel le moyen de réglage comprend un dispositif de réglage vissé.

5. Adaptateur suivant la revendication 4, dans lequel le dispositif de réglage vissé est vissé dans le corps.

6. Adaptateur suivant la revendication 4, dans lequel le dispositif de réglage vissé est vissé dans la tête du robinet.

7. Adaptateur suivant l'une des revendications précédentes, dans lequel les moyens élastiques sont un ressort (44).

8. Adaptateur suivant la revendication 7, dans lequel les moyens élastiques comprennent un deuxième ressort (33) conçu pour contrarier un mouvement de rotation du plongeur (38) l'éloignant de la position fermée.

9. Adaptateur suivant l'une quelconque des revendications précédentes, dans lequel la première position ouverte est en ligne avec la position fermée.

10. Adaptateur suivant la revendication 9, dans lequel la deuxième position ouverte est décalée en rotation de la position fermée.

11. Adaptateur suivant l'une quelconque des revendications précédentes, dans lequel la tête (49) du robinet et le corps (50) du robinet ont des moyens de coopération, qui règlent les mouvements du plongeur (38) entre les positions fermée et ouvertes.

12. Adaptateur suivant la revendication 11, dans lequel il y a une saillie (52) sur l'intérieur de la tête (49) du robinet et un canal (54) dans la paroi du corps (50) du robinet, de sorte que le mouvement du plongeur est possible seulement en déplaçant la saillie dans le canal (54).

13. Adaptateur suivant la revendication 12, dans lequel le canal (54) comprend une première partie (56) d'une première longueur et une deuxième partie (56) en position voisine, mais décalée en rotation de la première partie (54) de sorte que la saillie (52) peut se déplacer de la première partie à la deuxième partie (56) en réaction à la rotation de la tête (50).

14. Adaptateur suivant la revendication 13, dans lequel la première partie (54) est plus courte que la deuxième partie (58) et la première position ouverte est atteinte lorsque la saillie (52) se trouve à la base de la première partie, et la deuxième position ouverte est atteinte lorsque la saillie se trouve au fond de la deuxième partie (58).

15. Adaptateur suivant l'une quelconque des revendications précédentes, dans lequel la longueur du temps nécessaire, pour que le plongeur revienne de la première position ouverte à la position fermée, est comprise entre 5 et 8 secondes.

16. Adaptateur suivant l'une quelconque des revendications précédentes, dans lequel la longueur du temps nécessaire, pour que le plongeur revienne de la deuxième position ouverte à la position fermée, est comprise entre 10 et 360 secondes.
